# EUROPÄISCHE PATENTSCHRIFT

(11) **EP 1 926 628 B1**
(45) Veröffentlichungstag und Bekanntmachung des Hinweises auf die Patenterteilung: **22.04.2009**
(21) Anmeldenummer: 06792152.8
(22) Anmeldetag: 20.09.2006
(51) Int. Cl.: B60P 3/00

(54) **STRASSENTRANSPORTFAHRZEUG FÜR GROSSFLÄCHIGE GLASSCHEIBEN**
HAULAGE VEHICLE FOR GLASS PANES WITH A LARGE SURFACE AREA
VEHICULE DE TRANSPORT ROUTIER POUR VITRES A GRANDE SURFACE

(30) Priorität: 20.09.2005 TR 200503749
(43) Veröffentlichungstag der Anmeldung: 04.06.2008
(73) Patentinhaber: Tirsan Treyler A.S., Samandira 34887 Istanbul (TR)
(72) Erfinder: BULUTLAR, Fehir, Kozyatagi/Istanbul (TR); ÜNLÜER, Derun, Yenikoy/Istanbul (TR); BASKAN, Ali, Akyazi/Adapazari (TR)
(74) Vertreter: Schön, Thilo
(86) Internationale Anmeldenummer: PCT/EP2006/009109
(87) Internationale Veröffentlichungsnummer: WO 2007/033816

(56) Entgegenhaltungen:
- EP-A- 1 281 569
- DE-A1- 3 740 491
- DE-A1- 3 827 076
- DE-A1- 3 842 324

## Beschreibung

Die Erfindung betrifft ein Straßentransportfahrzeug für großflächige, auf einem Transportgestell stehende Glasscheiben, mit einer Traggestellaufnahme an den Längsträgern des Chassis und bordeigener Transportsicherung_{;} die über auf beiden Seiten des Transportgestells angeordnete Stützen mit flächigen, an die Glasscheiben anlegbaren Stützplatten verfügt.

Annähernd alle bisher bekannten Transportsicherungen haben eines gemeinsam, sie stützen sich immer gegen die beiden außen liegenden Längsträger des hinten offenen Chassis ab. Da die Längsträger und die beiden unten liegenden Tragwinkel, d. h. die Traggestellaufnahmen um den eigentlichen Laderaum gebaut werden müssen, besteht in diesem Bereich zum Einbau von verbindenden und stabilisierenden Querträgern keine Möglichkeit. Die beiden Längsträger können somit nur vorn und hinter dem Ladeschacht miteinander verbunden werden. Vorne wird hierzu ein Querträger eingeschweißt, hinten muss eine lösbare Verbindung gebaut werden, da die Be- und Entladung von hier durchgeführt wird. Hierzu ist eine Hecktür mit Zentrierbolzen oder ähnlichen Ausführungen vorgesehen, die beim Verschließen den Gesamtrahmen in die gewünschte Lage zwingen. Aufgrund dieser Bauart und der erforderlichen freien Ladeschachtlänge von rund 7500 mm ist eine besonders große Steifigkeit der Längsträger in diesem Bereich nicht möglich. Beim Zuspannen der Transportsicherung gegen das Glasscheibenpaket werden durch den Aufbau der Stützböcke die Zugspannkräfte direkt in die Längsträger eingeleitet. Je höher hierbei die Stützböcke sind, um so größer werden die Kräfte, die auf die Längsträger einwirken. Die Längsträger werden hierbei nach außen gedrückt und gleichzeitig verdreht. Um ein Abheben der Glasladung bei Querbeschleunigungen wie Kurven zu verhindern, müssen über den Zugspanndruck die Längsträger so weit vorgespannt werden, dass ein weiteres Aufspreizen nicht mehr möglich ist. Bei früher üblichen Glasgestellen in A-Form teilte sich die bis zu rund 24 t schwere Glasladung zur Hälfte links und rechts auf, sodass jeweils nur die halbe Ladung vom Sicherungssystem abgestützt werden musste. Bei den heute üblichen Glastransportgestellen in L-Form wird die gesamte Ladung von einer Seite aufgenommen und muss auch so gesichert werden. Hierbei müssen die erforderlichen Zugspannkräfte wesentlich erhöht werden. Da der erhöhte Druck nicht nur bei Kurvenfahrten, sondern ständig auf die Längsträger und das Glaspaket einwirkt, können insbesondere am Glas aber auch am gesamten Fahrzeugrahmen Beschädigungen auftreten. Beim Transport von beschichteten, hochwertigen Gläsern, kann ein zu hoher Sicherungsdruck zu Beschädigungen der Beschichtung führen. Da derartige Gläser heute immer mehr eingesetzt werden, sind die beschriebenen Transportsicherungen den Anforderungen nicht mehr genügend ausgebildet. Problematisch ist auch an den bekannten Transportsicherungen und damit der Abstützung über die Längsträger, dass beim Aufnehmen der Transportgestelle möglichst früh die Hecktür geschlossen werden muss, da ansonsten beim Aufnehmen des Transportgestells vom Boden der Fahrzeugrahmen hinten verdreht wird und aufspreizt und in dieser Situation dann die Hecktür nicht mehr geschlossen werden kann. Hier sind extra Spreizstützen entwickelt worden, um beim Anheben des Gestells und geöffneter Tür anschließend die Hecktür doch noch schließen zu können, doch sind immer wieder erhebliche Schäden aufgetreten, wenn man vergessen hatte, diese Spreizen vor Herausnehmen des mit dem Glaspaket beladenen Traggestells wieder zu entfernen. Entsprechende Sicherungssysteme sind aus der DE 37 40 491 C2 bekannt. DE 3827076 offenbart eine Sicherungssysteme nach dem Oberbegriff des Anspruchs 1. Nach der DE 38 42 324 A1 hat man versucht diese Probleme dadurch zu minimieren, dass man die Transportsicherung im Entlastungszustand an dem Aufbau des Fahrzeuges, insbesondere an der Decke zu befestigen, um sie dann zum Verspannen herabzulassen. Die Stützplatten werden dann über an einem Querbalken angeordnete Stützen an die Glasscheiben herangeführt. Die aufzubringenden Stützkräfte sind viel zu gering, um Glasscheibenpakete größerer Abmessung, insbesondere bei Kurvenfahrten, sicher zu fixieren. Ganz davon abgesehen, ist eine solche Einrichtung auch nur für A-Gestelle alter Bauart vorgesehen worden. Über die Länge des Fahrzeuges gesehen müssen eine Vielzahl derartiger Stützen und Stützplatten angeordnet werden, um die Glasscheiben zumindest grundsätzlich zu halten. Wegen der mehr als unsicheren Sicherung der Glasscheiben hat sich diese Lösung nicht durchsetzen können.

Der Erfindung liegt daher die Aufgabe zu Grunde, eine die empfindlichen. Glasscheiben schonende und zugleich auch für die Sicherung von Einzelscheiben geeignete Transportsicherung zu schaffen.

Die Aufgabe wird gemäß der Erfindung dadurch gelöst, dass die Längsträger des am Heck offenen Chassis über über die Länge verteilt angeordnete Brückenträger miteinander verbunden sind, die über die Glasscheiben reichen, auf den Längsträgern abgestellt sind und an denen die Stützplatten tragend und Pendelarme aufweisende Stützen nach unten hängend angelenkt sind.

Mit einem so ausgebildeten Straßentransportfahrzeug können Glasscheibenpakete bis herunter zu Einzelscheiben sicher transportiert werden, weil die an den Pendelarmen angeordneten Stützplatten ganz schonend an die Glasscheiben oder Glasscheibenpakete herangeführt werden und mit nur geringen Zugspannkräften auf die Glasscheiben oder Glasscheibenpakete einwirken. Dabei werden die Zugspannkräfte nicht mehr über die Längsträger aufgenommen, sondern vielmehr von dem die Glasscheibenpakete überragenden Brückenträger, an dem wie beschrieben die Pendelarme nach .unten hängend gegen die Glasscheiben bewegbar angeordnet sind. Aufgrund dieser besonderen Ausbildung kann der Sicherungsdruck, der auf das Glasscheibenpaket oder die Einzelscheiben einwirkt, erheblich gemindert werden, um so unnötige Beschädigungen der Glasoberfläche zu vermeiden. Sinnvoll ist hierfür die Querverspannung über die gleichzeitig die beiden Längsträger über ihre Länge gesehen an mehreren Stellen miteinander verbunden sind. Damit ist erstmals auch im Bereich des eigentlichen Laderaums eine Verbindung ähnlich einem durchgehenden Querträger möglich. Gleichzeitig kann auf diese Art und Weise die Transportsicherung wesentlich vereinfacht ausgebildet und angeordnet werden.

Besonders vorteilhaft ist es, wenn die Pendelarme an den Brückenträgern unmittelbar in dem Verbindungsbereich zwischen Vertikal- und Horizontalträger angelenkt sind. Die Lagerung der Pendelarme wird also in die eigentliche obere Brückenkonstruktion verlegt, sodass die Pendelarme wie es der Name sagt, pendelnd bewegt werden können, um gegen die Glasscheiben bewegt zu werden oder von diesen weg bewegt zu werden. Die Zugspannkräfte werden in den Horizontalträger eingeleitet.

Eine besonders günstige Anordnung und Ausbildung der Pendelarme und der Brückenträger ist die, nach der sie korrespondierend winklig ausgebildet sind, sodass die Pendelarme auch aus den Eckbereichen heraus gelegt und so angeordnet werden können, dass ihr Pendelweg möglichst optimal kurz und annähernd horizontal verlaufend ist.

Unter Ausnutzung der vorteilhaft stabilen Querträgerverbindung sieht die Erfindung vor, dass die Stützen für die Pendelarme hydraulisch-elektrisch oder pneumatisch ausgeführt sind und dass die Pendelarme im oberen Bereich der Brückenträger angelenkt sind. Durch die oben nach innen gekröpften Pendelarme und nach innen gelegten Lagerpunkte können die entstehenden Abstützkräfte noch besser aufgenommen und direkt in die obere Querverbindung eingeleitet werden. Hierdurch entfallen alle bisherigen Spreiz- und Spannkräfte auf die unteren Rahmenträger.

Aufgrund der beschriebenen Ausbildung der Querverbindung ist es nicht mehr nötig, ein Aufspreizen der Längsträger zu verhindern. Aus diesem Grunde und aufgrund der besonderen Ausbildung der Pendelarme kann nun auch der Andruck auf die Glasscheiben verringert werden. Gemäß der Erfindung sind die Stützen die Pendelarme mit den Stützplatten nur an die Glasscheiben anlegend ausgelegt und in dieser Position gegen Öffnen gesichert. Dies bedeutet, dass eine wesentlich geringe Zugspannkraft erforderlich ist, um einen sicheren Transport der Glasscheiben beliebiger Abmessungen zu sichern. Besonders vorteilhaft ist, dass entsprechend beschichtete Glasscheiben nun transportiert werden können, ohne dass die Gefahr besteht, dass sie durch zu hohen pneumatischen oder hydraulischen Druck oder auch mechanischen Druck beschädigt werden.

Unter Ausnutzung der Brückenkonstruktion und der hängenden Transportsicherung sieht die Erfindung vor, dass die Pendelarme bis an die Längsträger heranreichend lang ausgebildet sind. Die Pendelarme sind so weit verlängert, dass beim Anschwenken an die Glasscheiben so gut wie keine Vertikalbewegung der Stützplatten entsteht. Hierdurch können auch die bisher erforderlichen linearen Ausgleichssysteme für die Stützplatten entfallen. Eine weitere Verbesserung in dieser Richtung wird durch die oben nach innen verlegten Schwenkpunkte erreicht. Auch Einzelscheiben auf den L-förmigen Transportgestellen können hierdurch optimal abgesichert werden. Die pendelnd aufgehängten Pendelarme können am Glas selbst besonders tief greifen, sodass das Sichern von auch kleinen Glaspaketen besser möglich wird.

Unter Einsparung linearer Ausgleichssysteme ist vorgesehen, dass die die Pendelarme bewegenden Stützen als beidseitig gelenkig mit den Pendelarmen und den Vertikalträgern / Horizontalträgern verbundene Hydraulikzylinder oder Pneumatikzylinder ausgebildet sind. Lediglich diese einfachen Hydraulik- oder Pneumatikzylinder reichen aus, um die Pendelarme in die jeweils gewünschte Position zu verschwenken oder in der Ladeposition anzuordnen.

Eine optimale Stabilität der Brückenträgern und eine günstige Unterbringung der Pendelarme erreicht man mit der Erfindung deshalb, weil die Brückenträger aus U-Profilen bestehen, deren Verbindungssteg nach außen weisend angeordnet ist und dass die Pendelarme zwischen den Flanken schwenkbar angeordnet sind. Dies führt zu einer raumsparenden Ausführung der Transportsicherung, wobei ein erfreulich geräumiger Laderaum verbleibt, der ein sicheres Einbringen des L-förmigen Transportgestelles ermöglicht, das dann über die heranschwenkenden Pendelarme mit den Stützplatten abgesichert wird.

Eine ausreichende Stabilität erhält das Gesamtchassis dadurch, dass über die Länge des Chassis mindestens zwei sich auf den Längsträgern abstützende und damit verbundene Brückenträger angeordnet sind. Die als Querträger mitwirkenden Brückenträger sind dabei nicht direkt zwischen den Längsträgern verlaufend ausgebildet, sondern vielmehr durch die über das Glaspaket reichenden Brückenträger, die sich beidseitig auf den gegenüberliegenden Längsträgern abstützen und diese dabei wirksam verbinden. Bei einer Gesamtlänge von rund 7,5 m reichen zwei solcher Brückenträger, wobei über diese beiden Brückenträger und die ihnen zugeordneten Transportsicherungen Glasscheiben beliebiger Abmessungen sicher zu fixieren sind.

Vorteilhaft sieht die Erfindung weiter vor, dass die Stützen der gegenüberliegend angeordneten Pendelarme über eine im Horizontalträger verlaufende Sicherungsleitung miteinander verbunden sind. Hierbei wird auf die bisher üblichen aufwendigen Systeme mit Drossel-, Ausgleichs- und Rückschlagventilen verzichtet. Es reicht, wenn über die Verbindungsleitung die beiden Stützen so miteinander verbunden sind, dass sie gleichzeitig beaufschlagt werden und auch gegen Öffnen gesichert werden.

Der bereits erwähnte große Laderaum, der ein einfaches und sicheres Einschieben der Transportgestelle ermöglicht, wird bezüglich der Transportsicherung dadurch gewährleistet, dass am oberen Ende der mit den Pendelarmen über ein Gelenk verbundenen Stützplatten ein Puffer und am Pendelarm eine korrespondierende Anschlagplatte vorgesehen ist. Mit dem Zurückziehen der Pendelarme und damit auch Zurückziehen der Stützplatten fährt das oberen Ende der Stützplatten mit dem Puffer gegen die Anschlagplatte am Pendelarm und zwar in dem Moment, wenn die Stützplatte gerade senkrecht steht. Damit ist ein optimaler Öffnungsquerschnitt des Laderaums immer gesichert.

Die einem Straßentransportfahrzeug für großflächige Glasscheiben zuzuordnende Transportsicherung ermöglicht es, sowohl einem A- wie insbesondere einem L-Gestell zugeordnete Glasscheibenpakete unterschiedlicher Dicke immer sicher so zu fixieren, dass das Straßentransportfahrzeug auch über große Entfernungen solche teilweise hochempfindlichen Glasscheiben transportieren kann. Die pendelnd aufgehängten Stützplatten sind an Pendelarmen angelenkt, die wiederum so an den Brückenträgern fixiert sind, dass die Einleitung der notwendigen Sicherungskräfte in die Glasscheiben bzw. die Glasscheibenpakete möglich ist, ohne dass die zum Teil empfindlichen, beschichteten Glasscheiben gefährdet werden. Dabei ist besonders von Vorteil, dass die Stützplatten über die entsprechend geschickt aufgehängten Pendelarme annähernd keine Vertikalbewegung ausführen, sondern nur Horizontalbewegungen, sodass die Glasscheiben eben nur leicht in horizontaler Richtung angedrückt werden. Die Stützen, an denen die Stützplatten angebracht sind, werden durch die Kombination mit den Pendelarmen wesentlich vereinfacht. Auch die Einleitung der Kräfte in die Brückenträger wird ohne Belastung der Längsträger des Chassis ermöglicht. Damit verbunden ist eine wesentliche Entlastung des Gesamtchassis und damit auch eine Vereinfachung des Fahrzeugaufbaus.

Die Einzelheiten, weiteren Merkmale und andere Vorteile der Erfindung ergeben sich aus der nachfolgenden Beschreibung einer Ausführungsform anhand der Figuren 1 bis 4. Hierbei zeigt:
- Figur 1: ein Straßentransportfahrzeug vom Heck aus gesehen mit eingebrachtem Transportgestell und Glasscheibenpaket,
- Figur 2: eine Seitenansicht des Straßentransportfahrzeuges nach Figur 1,
- Figur 3: ein Schnitt durch einen Brückenträger und
- Figur 4: eine Rückansicht des Straßentransportfahrzeuges mit geschlossener Hecktür.

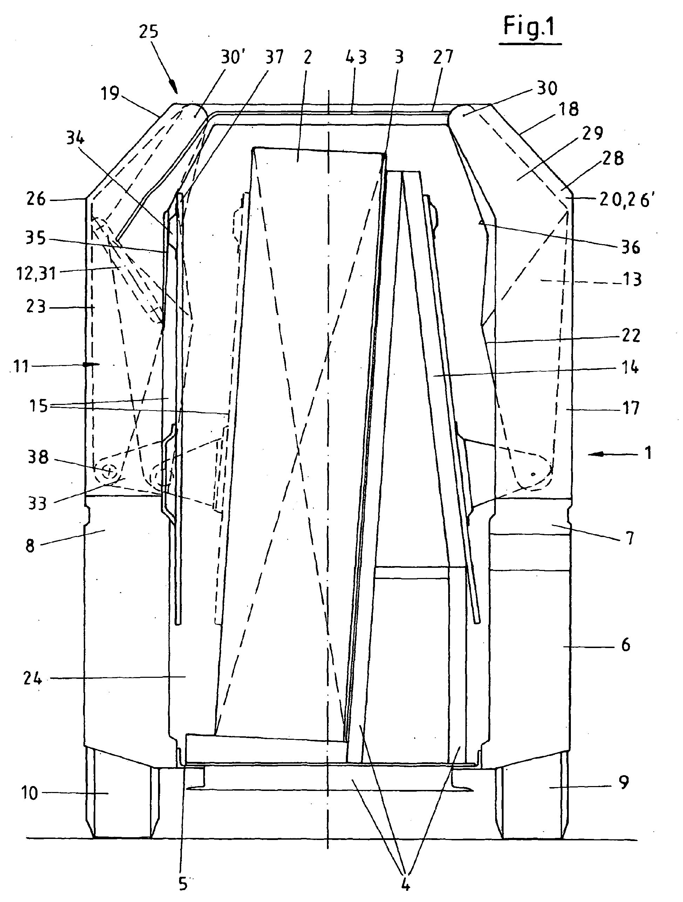

Aus Figur 1 ist ein Straßentransportfahrzeug 1 für großflächige Glasscheiben 3 zu ersehen. Diese Glasscheiben 3 sind zu einem Glasscheibenpaket 2 zusammengefasst auf einem L-förmigen Transportgestell 4 angeordnet. Dieses Transportgestell 4 wird von dem Straßentransportfahrzeug 1 mit herabgelassenem Chassis 6 angefahren, wobei die Aufnahmen am Chassis 6 so unter das Transportgestell 4 geschoben werden, dass dieses mit dem Wiederanheben des Chassis 6 von den Traggestellaufnahmen 5 mit hochgenommen wird, sodass es die in Figur 1 gezeigte Position erhält. Dabei wird ein Auseinanderbewegen des hinteren Endes des Chassis 6 mit den Längsträgern 7, 8 dadurch verhindert, dass die Längsträger 7, 8 verbindende Brückenträger 20, 21 vorgesehen sind, die auch die Glasscheibenpakete 2 überragen und darüber hinweggeführt sind, wie dies Figur 1 zeigt.

Die Glasscheibenpakete 2 bzw. die Glasscheiben 3 werden dann für den Transport vorbereitet, indem die Transportsicherung 11 aktiviert wird. In Figur 1 ist eine solche Transportsicherung 11 gezeigt, die oberhalb der Räder 9, 10 die beiden Längsträger 7, 8 miteinander verbindet. Pendelarme 22, 23 aufweisende Stützen 12, 13 mit den Stützplatten 14, 15 werden - wie auf der linken Seite angedeutet ist - gegen das Glasscheibenpaket 2 verfahren, wobei sich gleichzeitig die gegenüberliegende Stützplatte 14 an die senkrechten Tragarme des Transportgestells 4 anlegt.

Die Pendelarme 22, 23 sind mit ihrem Lagerpunkt 30, 30' in den Verbindungsbereich 25 von Vertikalträger 26 und Horizontalträger 27 gelegt und zwar ans obere Ende der Abwinklung 28. Im Bereich dieser Abwinklung 28 ist auch der Pendelarm 22, 23 mit einer korrespondierenden Abwinklung 29 ausgerüstet, sodass die beiden Pendelarme 22, 23 über als Stützen 12, 13 dienende Hydraulikzylinder 31 verschwenkt werden. Auf der linken Seite der Figur 1 ist verdeutlicht, dass dabei der eigentliche Pendelarm 22, 23 bzw. die Gelenkstütze 33 annähernd horizontal an das Glasscheibenpaket 2 herangeschwenkt wird. Hierfür braucht der Hydraulikzylinder 31 nur ausgefahren zu werden, ohne dass es irgendwelcher Horizontalkorrekturen oder dazu geeigneter Einrichtungen bedarf.

Am oberen Ende 37 der Stützplatten 14, 15 sind Puffer 34 vorgesehen, die sich beim Zurückschwenken der Stützplatte 14, 15 bzw. des Pendelarms 22, 23 gegen eine auf der Innenseite 36 angeordnete Anschlagplatte 35 anlegen, sodass die aus Figur 1 ersichtliche senkrechte Position im Ruhezustand bzw. im Beladungszustand gewährleistet ist. Dadurch ist der Laderaum annähernd vollständig frei für das Einschieben bzw. das Unterfahren des Transportgestells 4.

Selbst dann, wenn sich nur eine einzige Glasscheibe 3 auf dem Transportgestell 4 befindet, kann diese über den Pendelarm 23 und die Stützplatte 15 entsprechend abgesichert werden. Dies kann unschwer der besagten Figur 1 entnommen werden, auch wenn dort die Stützplatte 15 nicht in diese Endposition verfahren wiedergegeben ist. Das Gelenk 38 am äußeren Ende der Gelenkstütze 33 gibt der Stützplatte 14, 15 die notwendige Beweglichkeit.

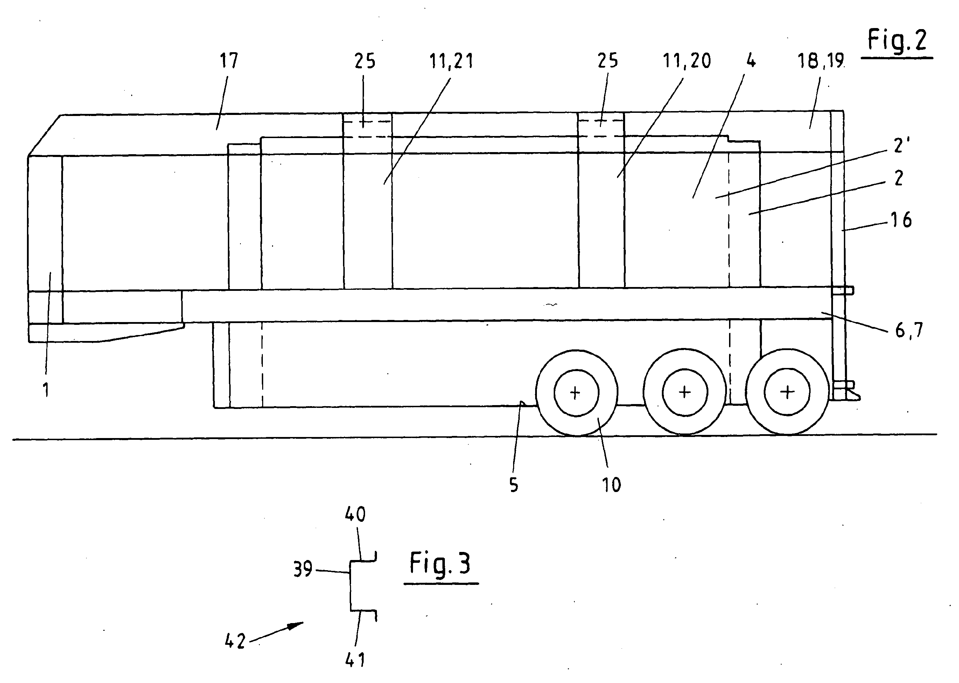

Figur 2 zeigt ein entsprechendes Straßentransportfahrzeug 1 in Seitenansicht, wobei die beiden über die Länge der Längsträger 7, 8 verteilten Brückenträger 20, 21 dargestellt sind. Dargestellt ist weiter, dass Glasscheibenpakete 2, 2' unterschiedlicher Abmessungen über die geschilderte Transportsicherung 11 gesichert mit einem solchen Fahrzeug transportiert werden können. Am Heck 16 ist eine hier nicht im Einzelnen wiedergegebene Hecktür 45 angeordnet, die nach dem Beladen des Straßentransportfahrzeuges 1 geschlossen wird. Diese Position gibt Figur 2 wieder. Einer besonderen Sicherung bis zum Schließen der Hecktür bedarf es nicht.

Figur 3 zeigt einen Brückenträger 20, 21 oder auch einen Horizontalträger 27 oder Vertikalträger 26 des Brückenträgers 20, 21 im Schnitt, wobei deutlich wird, dass es sich hier um ein U-Profil 42 handelt. Diese U-Profile 42 sind gemäß Figur 2 mit dem Verbindungssteg 39 nach außen weisend über das Glasscheibenpaket 2 sich erstreckend angeordnet. Dadurch können die Pendelarme 22, 23 und auch der Hydraulikzylinder 31 in das U-Profil 42 hineingelegt werden, wobei der Lagerpunkt 30 im Verbindungsbereich 25 liegend, zwischen den beiden Flanken 40, 41 des U-Profils 42 angeordnet ist. Gemäß Figur 1 verläuft im U-Profil 42, hier des Horizontalträgers 27 eine Sicherungsleitung 43, die die beiden Hydraulikzylinder 31 miteinander verbindet. Hierdurch wird sichergestellt, dass beide Hydraulikzylinder 31 gleichzeitig beaufschlagt werden und dann auch gegen Öffnen gesichert werden, sodass ein einwandfreier Betrieb der Transportsicherung 11 gewährleistet ist.

Die gesamte Ladung, d. h. das Glasscheibenpaket 2 und auch das Transportgestell 4 sind im Laderaum 24 für den Transport gesichert untergebracht und von einem Aufbau 17 umgeben, der im Bereich des Daches Abschrägungen 18, 19 aufweist. Diese Abschrägungen 18, 19 sind wie Figur 1 entnommen werden kann, korrespondierend mit den Abwinklungen 28, 29 ausgebildet, sodass ein rundum dichter Aufbau 17 gewährleistet ist.

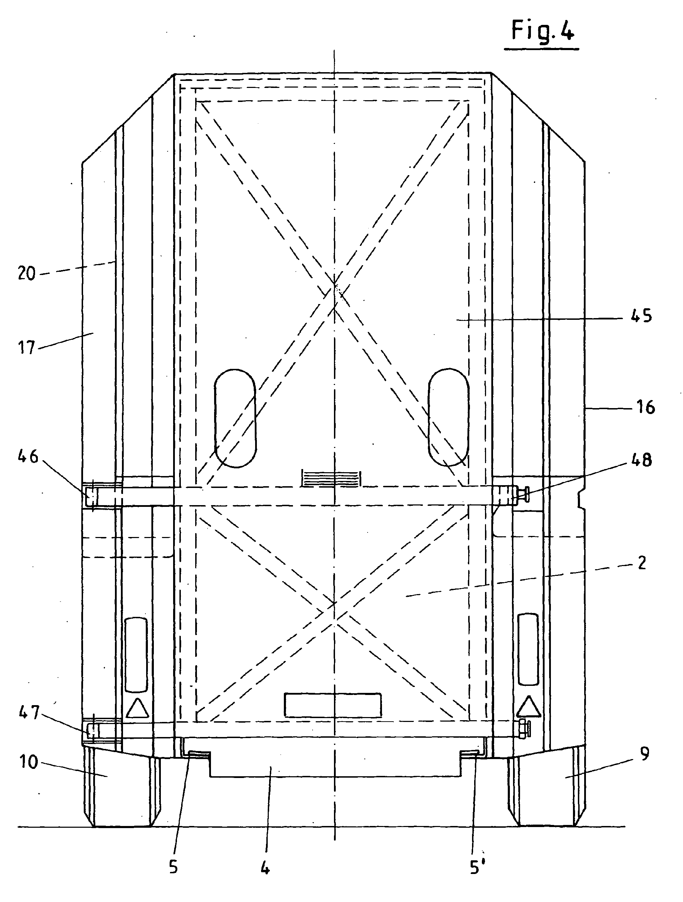

Figur 4 schließlich zeigt eine Rückansicht des Straßentransportfahrzeuges 1, hier verschlossen durch eine Hecktür 45, die um die Gelenke 46, 47 verschwenkt werden kann. Über Sicherungen 48 wird die Hecktür 45 so abgesichert, dass sie sich nicht selbsttätig während des Transportes öffnen kann. Angedeutet ist in Figur 4 weiter, dass das Transportgestell 4 sich auf den winkelförmigen Traggestellaufnahmen 5, 5' abstützt, wobei schon aufgrund des Gewichtes sichergestellt ist, dass das Transportgestell 4 in den Traggestellaufnahmen 5 nicht verrutschen kann. Zusätzliche Hilfsmittel können vorgesehen werden, wobei gleichzeitig auch die Transportsicherung 11 das gesamte Transportgestell 4 mit den aufgelagerten Glasscheibenpaketen 2 auch gegen Verrutschen mit sichert. Eigentliche Aufgabe des Transportsicherung 11 ist aber das Fixieren der Glasscheiben 3 des Glasscheibenpaketes 2.

Die beschriebene Ausführungsform ist ein L-fömiges Transportgestell 4 mit einem aufgelagerten Glasscheibenpaket 3. Bei dieser Ausbildung können mit Hilfe der Transportsicherung 11 auch A-förmig ausgebildete Transportgestelle 4 gesichert werden.

## Patentansprüche

1. Straßentransportfahrzeug für großflächige, auf einem Transportgestell (4) stehende Glasscheiben (2, 3), mit einer Traggestellaufnahme (5) an den Längsträgern (7, 8) des Chassis (6) und bordeigener Transportsicherung (11), die über auf beiden Seiten des Transportgestells (4) angeordnete Stützen (12, 13) mit flächigen, an die Glasscheiben (2, 3) anlegbaren Stützplatten (14, 15) verfügt,
**dadurch gekennzeichnet,**
**dass** die Längsträger (7, 8) des am Heck (16) offenen Chassis (6) über über die Länge verteilt angeordnete Brückenträger (20, 21) miteinander verbunden sind, die über die Glasscheiben (2, 3) reichen, auf den Längsträgern (7, 8) abgestellt sind und an denen die Stützplatten (14, 15) tragend und Pendelarme (22, 23) aufweisende Stützen (12, 13) nach unten hängend angelenkt sind.

2. Straßentransportfahrzeug nach Anspruch 1,
**dadurch gekennzeichnet,**
**dass** die Pendelarme (22, 23) an den Brückenträgern (20, 21) unmittelbar in dem Verbindungsbereich (25) zwischen Vertikal- und Horizontalträger (26, 27) angelenkt sind.

3. Straßentransportfahrzeug nach Anspruch 2,
**dadurch gekennzeichnet,**
**dass** die Pendelarme (22, 23) mit den Brückenträgern (20, 21) korrespondierend winklig ausgebildet sind.

4. Straßentransportfahrzeug nach Anspruch 2,
**dadurch gekennzeichnet,**
**dass** die Stützen (12, 13) für die Pendelarme (22, 23) hydraulisch-elektrisch oder pneumatisch ausgeführt sind und dass die Pendelarme (22, 23) im oberen Bereich der Brückenträger (20, 21) angelenkt sind.

5. Straßentransportfahrzeug nach Anspruch 3,
**dadurch gekennzeichnet,**
**dass** die Pendelarme (22, 23) oben nach innen gekröpft ausgebildet sind und dass ihre Lagerpunkte (30) nach innen in den Horizontalträger (27) gelegt sind.

6. Straßentransportfahrzeug nach Anspruch 4,
**dadurch gekennzeichnet,**
**dass** die Stützen (12, 13) die Pendelarme (22, 23) mit den Stützplatten (14, 15) nur an die Glasscheiben (2, 3) anlegend ausgelegt und in dieser Position gegen Öffnen gesichert sind.

7. Straßentransportfahrzeug nach Anspruch 4,
**dadurch gekennzeichnet,**
**dass** die Pendelarme (22, 23) bis an die Längsträger (7, 8) heranreichend lang ausgebildet sind.

8. Straßentransportfahrzeug nach Anspruch 4,
**dadurch gekennzeichnet,**
**dass** die die Pendelarme (22, 23) bewegenden Stützen (12, 13) als beidseitig gelenkig mit den Pendelarmen (22, 23) und den Vertikalträgern (26) / Horizontalträgern (27) verbundene Hydraulikzylinder (31) oder Pneumatikzylinder ausgebildet sind.

9. Straßentransportfahrzeug nach Anspruch 1,
**dadurch gekennzeichnet,**
**dass** die Brückenträger (20, 21) aus U-Profilen (42) bestehen, deren Verbindungssteg (39) nach außen weisend angeordnet ist und dass die Pendelarme (22, 23) zwischen den Flanken (40, 41) schwenkbar angeordnet sind.

10. Straßentransportfahrzeug nach Anspruch 1,
**dadurch gekennzeichnet,**
**dass** über die Länge des Chassis (6) mindestens zwei sich auf den Längsträgern (7, 8) abstützende und damit verbundene Brückenträger (20, 21) angeordnet sind.

11. Straßentransportfahrzeug nach Anspruch 4,
**dadurch gekennzeichnet,**
**dass** die Stützen (12, 13) der gegenüberliegend angeordneten Pendelarme (22, 23) über eine im Horizontalträger (27) verlaufende Sicherungsleitung (43) miteinander verbunden sind.

12. Straßentransportfahrzeug nach Anspruch 1,
**dadurch gekennzeichnet,**
**dass** am oberen Ende (37) der mit den Pendelarmen (22, 23) über ein Gelenk (38) verbundenen Stützplatten (14, 15) ein Puffer (34) und am Pendelarm (22, 23) eine korrespondierende Anschlagplatte (35) vorgesehen ist.

## Claims

1. A road transport vehicle for glass panes (2, 3) with a large surface area which are placed on a transport frame (4), comprising a support frame receptacle (5) on the longitudinal beams (7, 8) of the chassis (6) and a builtin stabilisation device (11), which comprises supports (12, 13) arranged on both sides of the transport frame (4), said supports having flat support plates (14, 15) which can be laid against the glass panes (2, 3),
**characterized in that**
the longitudinal beams (7, 8) of the chassis (6), which is open at the rear (16), are connected to one another by means of bridge beams (20, 21) which are distributed over the length and extend over the glass panes (2, 3) and which rest on the longitudinal beams (7, 8), and to which supports (12, 13) which carry the support plates (14, 15) and comprise rocker arms (22, 23) are attached in articulated manner, hanging downwardly.

2. The road transport vehicle according to claim 1,
**characterized in that**
the rocker arms (22, 23) are attached in articulated manner to the bridge beams (20, 21) directly in the connection region (25) between vertical and horizontal beams (26, 27).

3. The road transport vehicle according to claim 2,
**characterized in that**
the rocker arms (22, 23) are configured angled to conform to the bridge beams (20, 21).

4. The road transport vehicle according to claim 2,
**characterized in that**
the supports (12, 13) for the rocker arms (22, 23) are configured hydraulically/electrically or pneumatically and that the rocker arms (22, 23) are connected in articulated manner to the bridge beams (20, 21) in the upper region of the bridge beams (20, 21).

5. The road transport vehicle according to claim 3,
**characterized in that**
the rocker arms (22, 23) are configured elbowed inwardly at the top and that their bearing points (30) are placed inwardly into the horizontal beams (27).

6. The road transport vehicle according to claim 4,
**characterized in that**
the supports (12, 13) are configured with the rocker arms (22, 23) lying with the support plates (14, 15) only against the glass panes (2, 3) and in this position are secured against opening.

7. The road transport vehicle according to claim 4,
**characterized in that**
the rocker arms (22, 23) are constructed long enough to reach as far as the longitudinal beams (7, 8).

8. The road transport vehicle according to claim 4,
**characterized in that**
the supports (12, 13) moving the rocker arms (22, 23) are configured as hydraulic cylinders (31) or pneumatic cylinders which are connected in articulated manner on both sides to the rocker arms (22, 23) and to the vertical beams (26) / horizontal beams (27).

9. The road transport vehicle according to claim 1,
**characterized in that**
the bridge beams (20, 21) are made from U-profiles (42) the connecting webs (39) of which are arranged facing outwardly, and that the rocker arms (22, 23) are arranged pivotable between the flanks (40, 41).

10. The road transport vehicle according to claim 1,
**characterized in that**
at least two bridge beams (20, 21) are arranged over the length of the chassis (6) resting on the longitudinal beams (7, 8) and connected to said longitudinal beams (7, 8).

11. The road transport vehicle according to claim 4,
**characterized in that**
the supports (12, 13) of the rocker arms (22, 23) which are arranged opposing one another are connected to one another via a safety line (43) extending within the horizontal beam (27).

12. The road transport vehicle according to claim 1,
**characterized in that**
at the upper end of the support plates (14, 15) connected to the rocker arms (22, 23) via a joint (38), a buffer (34) and, on the rocker arm (22, 23), a corresponding stop plate (35) are provided.

## Revendications

1. Véhicule de transport routier pour vitres (2, 3) de grande surface se trouvant sur un bâti de transport (4), avec un logement de cadre porteur (5) sur les traverses longitudinales (7, 8) du châssis (6) et une fixation de transport (11) embarquée qui dispose d'appuis (12, 13), disposés sur les deux côtés du bâti de transport (4), avec des plaques d'appui (14, 15) planes pouvant être appuyées sur les vitres (2, 3),
**caractérisé en ce que**
les traverses longitudinales (7, 8) du châssis (6) ouvert au hayon (16) sont reliés par des châssis-poutres (20, 21) disposés sur toute la longueur, châssis-poutres qui débordent des vitres (2, 3), sont déposés sur les traverses longitudinales (7, 8) et sur lesquels sont articulés de manière portante les plaques d'appui (14, 15) et des appuis (12, 13), présentant des bras pendulaires (22, 23), suspendus vers le bas.

2. Véhicule de transport routier selon la revendication 1,
**caractérisé en ce que**
les bras pendulaires (22, 23) sont articulés sur les châssis-poutres (20, 21) directement dans la zone de liaison (25) entre la poutre verticale et la poutre horizontale (26, 27).

3. Véhicule de transport routier selon la revendication 2,
**caractérisé en ce que**
les bras pendulaires (22, 23) sont formés de manière angulaire par rapport aux châssis-poutres (20, 21) correspondants.

4. Véhicule de transport routier selon la revendication 2,
**caractérisé en ce que**
les appuis (12, 13) pour les bras pendulaires (22, 23) sont hydro-électriques ou pneumatique et **en ce que** les bras pendulaires (22, 23) sont articulés dans la zone supérieure des châssis-poutres (20, 21).

5. Véhicule de transport routier selon la revendication 3,
**caractérisé en ce que**
les bras pendulaires (22, 23) sont coudés vers l'intérieur en haut et **en ce que** leurs points de palier (30) sont posés vers l'intérieur dans le support horizontal (27).

6. Véhicule de transport routier selon la revendication 4,
**caractérisé en ce que**
les appuis (12, 13) sont formés de manière à appuyer les bras pendulaires (22, 23) avec les plaques d'appui (14, 15) seulement sur les vitres (2, 3) et sont protégés dans cette position contre l'ouverture.

7. Véhicule de transport routier selon la revendication 4,
**caractérisé en ce que**
les bras pendulaires (22, 23) sont formés de manière à être suffisamment longs pour atteindre les traverses longitudinales (7, 8).

8. Véhicule de transport routier selon la revendication 4,
**caractérisé en ce que**
les appuis (12, 13) qui déplacent les bras pendulaires (22, 23) sont formés comme cylindres hydrauliques (31) ou cylindres pneumatiques reliés aux bras pendulaires (22, 23) et aux poutres verticales (26) / poutres horizontales (27).

9. Véhicule de transport routier selon la revendication 1,
**caractérisé en ce que**
les châssis-poutres (20, 21) se composent de profilés en U (42) dont le dos (39) est disposé de manière orientée vers l'extérieur et **en ce que** les bras pendulaires (22, 23) sont disposés de manière pivotante entre les flancs (40, 41).

10. Véhicule de transport routier selon la revendication 1,
**caractérisé en ce que**
sur la longueur du châssis (6) sont disposés au moins deux châssis-poutres (20, 21) qui s'appuient sur les traverses longitudinales (7, 8) et sont reliés à ces dernières.

11. Véhicule de transport routier selon la revendication 4,
**caractérisé en ce que**
les appuis (12, 13) des bras pendulaires (22, 23) disposés en face sont reliés l'un avec l'autre par l'intermédiaire d'un câble de sûreté qui court dans la poutre horizontale (27).

12. Véhicule de transport routier selon la revendication 1,
**caractérisé en ce que**
sont prévus un tampon (34) à l'extrémité supérieure (37) des plaques d'appui (14, 15) reliés aux bras pendulaires (22, 23) par l'intermédiaire d'un joint articulé (38) et, sur le bras pendulaire (22, 23) une plaque de butée (35) correspondante.
